# EUROPÄISCHE PATENTSCHRIFT

(11) **EP 0 364 865 B1**
(45) Veröffentlichungstag und Bekanntmachung des Hinweises auf die Patenterteilung: **08.09.1993**
(21) Anmeldenummer: 89118814.6
(22) Anmeldetag: 10.10.1989
(51) Int. Cl.: C21B 13/14

(54) **Verfahren zur Herstellung von Stahl aus Feinerz**
Method for producing steel from ore fines
Procédé pour produire l'acier à partir des fines de minerai

(30) Priorität: 17.10.1988 DE 3835332
(43) Veröffentlichungstag der Anmeldung: 25.04.1990
(73) Patentinhaber: METALLGESELLSCHAFT Aktiengesellschaft, 60015 Frankfurt (DE)
(72) Erfinder: Weber, Ralph, W-4230 Wesel (DE)

(56) Entgegenhaltungen:
- EP-A- 0 255 180
- DE-A- 2 132 150
- DE-A- 2 852 964
- DE-B- 2 521 038
- DE-B- 2 735 020
- PATENT ABSTRACTS OF JAPAN, Band 10, Nr. 230 (C-365)(2286), 09 August 1986#
- TRANSACTIONS ISIJ, Band 27, 1987, Tokyo (JP); N.DEMUKAI et al., Seite B-178#
- MBM, Oktober 1986; Seiten 47-51#
- TRANSACTIONS ISIJ, Band 28, 1988; Seiten 1014-1020#

## Beschreibung

Die Erfindung betrifft ein verfahren zur Herstellung von Stahl aus Feinerz gemäß dem Oberbegriff von Patentanspruch 1.

Ein Verfahren dieser Art ist durch die DE-OS 21 32 150 bekannt geworden. Bei dem bekannten Verfahren zum direkten Herstellen von Stahl wird Feinerz in hintereinander geschalteten Zyklonen reduziert, wobei als Reduktionsgas das aus Kohlenmonoxyd bestehende Abgas des Schmelz- und Frischaggregats benutzt wird. An den Reduktions- und Einschmelzprozeß schließt sich ein Frischvorgang im selben Gefäß an.

Durch die JP-A-61-64807 ist ein Schmelzreduktionsverfahren bekanntgeworden, bei dem Feinerz mit Kohle und Luft in einer Vorstufe erhitzt und dann in einer Wirbelschicht eines Reduktionsaggregats in Anwesenheit von Kohle und eines Reduktionsgases vorreduziert wird. Das aus dem Reduktionsaggregat ausgetragene Gemisch aus vorreduziertem Feinerz und Kohle wird mit Kohle versetzt, zu Preßlingen heißkompaktiert und dann in ein Schmelzgefäß chargiert. Hier werden die Preßlinge geschmolzen und das vorreduzierte Erz in der schmelzflüssigen Phase fertigreduziert. Die für den Schmelz- und Schmelzreduktionsprozeß erforderliche Energie wird durch Umsetzen des in der Schmelze enthaltenen Kohlenstoffs mittels Sauerstoff gewonnen, der einerseits durch eine Lanze und andererseits durch Bodendüsen in das Schmelzgefäß eingeblasen wird. Das CO-haltige Abgas des Schmelzgefäßes wird dem Reduktionsaggregat als Reduktionsgas zur Vorreduktion des Feinerzes zugeführt.

Aus der Zeitschrift Transactions ISIJ, 28, (1988), Seiten 1014 bis 1020 ist ein Verfahren zum Schmelzen von direktreduziertem Eisen in einem ohne elektrische Energie betriebenen Schrotteinschmelzofen bekanntgeworden. Oberhalb des Schmelzgefäßes ist ein Schrottvorwärmer angeordnet, durch den die heißen Abgase des Schmelzgefäßes hindurchgeleitet werden und der Schrott und Eisenschwammbriketts aufnimmt, die hier vor dem Chargieren in das Schmelzgefäß erhitzt werden. Wegen der Oxidationsneigung der Eisenschwammbriketts wird zur Verhinderung einer zu starken Reoxidation die Temperatur im Vorwärmer unterhalb 600°C gehalten.

Beim ELRED-Verfahren wird Feinerz in einer zirkulierenden Wirbelschicht mit Kohle zu 70% metallisiert und anschließend einem Gleichstrom-Reduktionsofen mit Hohlelektrode zugeführt und zu einem Vormetall verarbeitet. Die erforderliche elektrische Schmelzenergie wird aus den Abgasen von Vor- und Schmelzreduktion erzeugt. Bei diesem Prozeß besteht die Schwierigkeit, den Kohlenstoffaustrag aus dem Reduktionsaggregat zu begrenzen, insbesondere wenn ein höherer Metallisierungsgrad im Reduktionsaggregat angestrebt wird. Bei hohen Reduktionstemperaturen über 900°C muß, um ein Zusammenkleben der Eisenpartikel zu verhindern, dem Reduktionsaggregat eine große Menge an feiner Kohle zugegeben werden. Dies hat zur Folge, daß zusammen mit den Eisenschwammpartikeln eine wesentliche Menge an vergasten Kohlepartikeln ausgetragen wird. Vor dem Einbringen in den Lichtbogenofen muß ein großer Teil der Kohle aus dem Austrag entfernt werden, wozu eine Kühlung und eine kostenaufwendige Trennung der Kohleteilchen von den Metallteilchen notwendig sind.

In den letzten 20 Jahren hat die Stahlherstellung aus Schrott eine enorme Ausweitung erfahren, da einerseits dieses Ausgangsmaterial in großer Menge verfügbar ist und andererseits der Energiebedarf verhältnismäßig gering. Für die Erzeugung höherwertiger Stähle besteht hier jedoch das Problem, daß das Ausgangsmaterial Schrott nicht in der gewünschten Qualität vorliegt. Schrott ist oft durch Legierungsbestandteile sowie aufgrund von Beschichtungsprozessen und anderen Verarbeitungsprozessen, wie sie in der mechanischen Industrie angewandt werden, verunreinigt.

Eine Herstellung verbesserter Stahlqualitäten ist möglich, wenn neben Schrott, der Verunreinigungen aufweist, Original-Hüttenmetall wie Roheisen von einem Hochofen oder Eisenschwamm (direktreduziertes Eisenerz) eingesetzt wird. Je nach Güteanforderung soll das Verhältnis von Schrott und Original-Hüttenmetall im Einsatzgemisch in weiten Grenzen veränderbar sein. Bei sogenannten Ministahlwerken kommt als original Hüttenmetall in erster Linie Eisenschwamm aus Feinerz in Frage.

Aufgabe der Erfindung ist es, bei einem Verfahren der im Oberbegriff des Patentanspruchs 1 genannten Art, den Metallisierungsgrad im Reduktionsaggregat zu erhöhen und den thermischen Wirkungsgrad beim Einschmelzprozeß der Eisenschwammpartikel zu verbessern. Es soll aus dem Eisenschwamm ohne den Zwischenschritt einer Roheisenherstellung unmittelbar Stahl erzeugt werden können. Als Einsatzmaterialien soll nicht nur direktreduziertes Feinerz, d.h Eisenschwamm, sondern auch Eisenschrott verwendet werden können, wobei im Hinblick auf die Qualitätserfordernisse des hergestellten Stahls die Mischungsverhältnisse in einem weiten Umfang variierbar sein sollen.

Die Erfindung ist durch die Merkmale des Anspruchs 1 gekennzeichnet. Vorteilhafte Ausgestaltungen der Erfindung sind den übrigen Ansprüchen zu entnehmen.

Demgemäß erfolgt die Reduktion des Feinerzes in Anwesenheit von Kohle in einer Wirbelschicht, vorzugsweise in einer zirkulierenden Wirbelschicht, in der als fluidisierendes Gas Reduktionsgas eingesetzt wird, um den Metallisierungsgrad zu erhöhen. Ein für diesen Zweck geeignetes Reduktionsaggregat ist der von der Firma Lurgi GmbH entwickelte Reaktor mit zirkulierender Wirbelschicht. Im Gegensatz zum eingangs erwähnten ELRED-Prozeß wird dieser Reaktor als Fertigreduktionsaggregat mit einem heißen Reduktionsgas als fluidisierendes Medium eingesetzt. Der mit dieser Betriebsweise verbunden. Nachteil eines höheren Kohlenstoffaustrags wird dadurch eliminiert, daß ein Schmelzgefäß eingesetzt wird, in dem dieser Kohleaustrag aus dem Reduktionsaggregat als Energiequelle ausnutzbar ist. In besonderer Weise eignet sich hier der unter dem Namen EOF (Energy Optimizing Furnace) bekannt gewordene Stahlherstellungsofen, der als Sauerstoffreaktor nicht nur Kohle bei den Eingangsmaterialien akzeptiert, sondern als Wärmequelle für den Prozeß zusätzlich Kohle benötigt. Um die aus dem Reduktionsaggregat ausgetragenen entgasten Kohleteilchen und die Eisenschwammteilchen dem Schmelz- und Reaktionsgefäß in geeigneter Weise zuführen zu können, wird das Gemisch nach dem Austrag aus dem Reduktionsaggregat heißkompaktiert und erst dann in das Schmelzgefäß chargiert. Hierdurch werden die beiden Materialien in eine ausreichende physikalische Größe und Dichte gebracht, um die Schlackenschicht durchdringen zu können und innerhalb des Bades schmelzen bzw. sich auflösen zu können. Der Kohlenstoff wird im Bad gelöst und ermöglicht durch den in das Bad eingeblasenen Sauerstoff ein optimales Wärmeeinbringen in die Schmelze.

Die durch die Oxydationsreaktionen des Kohlenstoffs erzeugten Abgase werden im Gefäß nachverbrannt und dazu benutzt, Schrott vorzuwärmen, der dem Schmelz- und Reaktionsaggregat als weiteres Einsatzmaterial zugeführt werden kann.

Dieses System zeichnet sich durch eine hohe Flexibilität in der Wahl des Einsatzmaterials aus, durch geringe Kosten an Rohmaterialien und damit durch sehr niedrige Stahlherstellungskosten, selbst für Stähle mit den höchsten Qualitätsanforderungen.

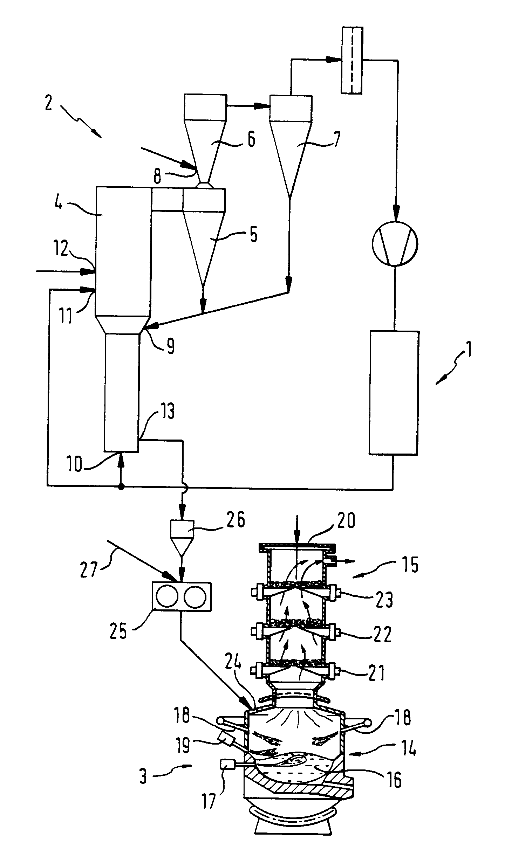

Die Erfindung wird durch ein Ausführungsbeispiel anhand einer Figur näher erläutert. Die Figur stellt das Prinzip des erfindungsgemäßen Verfahrens zur Herstellung von Stahl aus Feinerz dar.

Die in der Figur schematisch dargestellte Anlage enthält einen Reduktionsgaserzeuger 1, ein Reduktionsaggregat 2 und ein Schmelzgefäß 3. Der Reduktionsgaserzeuger ist als Reformer ausgebildet, der das Abgas des Reduktionsaggregates in ein hochwertiges Reduktionsgas umwandelt, welches der letzten Stufe des Reduktionsaggregates 2 mit einer Temperatur von etwa 900°C zugeführt wird. Das Reduktionsaggregat arbeitet nach dem Prinzip einer zirkulierenden Wirbelschicht und umfaßt eine Fertigreduktionsstufe 4 sowie Vorreduktionszyklone 5, 6 und 7. Dem Vorreduktionszyklon 6 wird über einen Einlaß 8 Feinerz zugeführt, das mit dem heißen Abgas des Fertigreduktionszyklons 4 vorgewärmt und vorreduziert wird, bevor es über den Vorreduktionszyklon 7 durch einen Einlaß 9 der Fertigreduktionsstufe 4 zugeführt wird. In dieser Stufe, in die etwa 900°C heißes Reduktionsgas durch Einlässe 10 und 11 als Fluidisierungsgas eingeleitet wird und der außerdem über einen Einlaß 12 Feinkohle zugeführt wird, erfolgt die Reduktion der Feinerzpartikel bis zu einem sehr hohen Metallisierungsgrad (> 95%). Die hierdurch erhaltenen Eisenschwammpartikel werden zusammen mit entgasten Kohleteilchen bei einer Temperatur von etwa 800°C durch einen Auslaß 13 der Fertigreduktionsstufe ausgetragen. Der Anteil der Kohleteilchen beträgt hierbei etwa 10 Gew.%.

Das Abgas des Reduktionsaggregates verläßt die Vorreduktionsstufe 7 mit einer Temperatur von etwa 400°C und wird nach Durchlauf durch ein Heißgasfilter dem Reformer des Reduktionsgaserzeugers 1 zugeleitet.

Zum Einschmelzen der Eisenschwammpartikel dient das Schmelzgefäß 14 eines EOF (Energy Optimizing Furnace), der in der Zeitschrift MBM-Metall Bulletin Monthly - Oktober 1986 auf den Seiten 47 bis 51 beschrieben ist. Über dem Schmelzgefäß 14 ist ein Chargiergutvorwärmer 15 angeordnet. Das Schmelzgefäß 14 nimmt eine Eisenschmelze 16 auf. Unterhalb des Badspiegels dieser Eisenschmelze münden in das Schmelzgefäß 14 Unterbaddüsen 17 um Einblasen von Sauerstoff und gegebenenfalls von Feststoffen, wie pulverisierter Kohle oder Zuschlägen, mittels eines Trägergases. Oberhalb des Badspiegels münden weitere Düsen 18 zum Einblasen von Sauerstoff oder vorerhitzter Luft, die über eine Ringleitung zuführbar ist und die zur Nachverbrennung des aus dem Schmelzbad aufsteigenden CO-haltigen Abgases dient. Außerdem sind noch Öl-Sauerstoff-Brenner 19 vorgesehen.

Der Chargiergutvorwärmer 15 ist in Form eines Behälters ausgebildet, der oben durch einen horizontal verfahrbaren Deckel 20 verschließbar ist. Durch Rostteile 21, 22 und 23, die durch eine Betätigungseinrichtung zwischen einer Schließposition, in der sie in das Innere des Behälters ragen (dargestellte Position) und einer Freigabeposition, in der sie aus dem Behälterinneren zurückgezogen sind, bewegbar sind, ist der Behälter in drei übereinanderliegende Vorwärmabschnitte unterteilt. In diesen Vorwärmabschnitten wird das Chargiergut aufgenommen und von den heißen Abgasen aus dem Schmelzgefäß, wie durch Pfeile angedeutet, durchströmt und hierbei erhitzt. Das Chargiergut besteht im wesentlichen aus einzuschmelzenden festen Eisenwerkstoffen, wie Stahlschrott.

Im Schmelzgefäß 14 ist ferner eine verschließbare Eintrittsöffnung 24 für den Heißaustrag aus dem Reduktionsaggregat 2 vorgesehen. Dieser Heißaustrag wird dem Schmelzgefäß 14 jedoch nicht unmittelbar, sondern erst nach einer Heißkompaktierung zugeführt. Zu diesem Zweck ist zwischen dem Auslaß 13 der Fertigreduktionsstufe 4 und dem Einlaß 24 des Schmelzgefäßes 14 eine Heißkompaktierstufe 25 vorgesehen, der ein Speicher 26 für das ausgetragene Gemisch aus Eisenschwammteilchen und Kohle vorgeschaltet ist. Der Heißkompaktierstufe 25 kann außerdem Feinkohle über eine zusätzliche Leitung 27 zugeführt werden, wodurch das Mischungsverhältnis Kohle/Eisenschwamm vergrößert werden kann, wenn die Energiezufuhr zum Schmelzgefäß erhöht werden soll.

Die Eisenschwamm-Kohlepreßlinge, die die Heißkompaktierstufe 25 verlassen, haben eine solche Größe und Dichte, daß sie beim Chargieren in das Schmelzgefäß die Schlackenschicht auf dem Schmelzbad 16 durchstoßen und in die Schmelze gelangen können. Je nach Kohlenstoffgehalt der Schmelze löst sich die Kohle schnell in der Schmelze und liefert unter dem Einfluß des durch die Unterbaddüsen 17 eingeblasenen Sauerstoffs die erforderliche Schmelzenergie zum Aufschmelzen des Eisenschwamms. Vorzugsweise werden in das Schmelzgefäß 14 nicht nur die heißen Eisenschwamm-Kohlepreßlinge chargiert, sondern auch ein im Chargiergutvorwärmer 15 vorerhitzter Schrott, wobei das Verhältnis der Ausgangsstoffe Feinerz und Schrott in weiten Grenzen variierbar ist. Die bei einem höheren Schrottsatz erforderliche Zusatzenergie kann teilweise durch die Öl-Sauerstoff-Brenner 19 teilweise durch zusätzliche Kohlenstoffzufuhr über die Zusatzleitung 27 zur Heißkompaktierstufe 25 oder direkt über die Düsen 17 eingebracht werden.

Bei einer gemischten Fahrweise, d.h. beim Chargieren von Eisenschwamm-Kohlepreßlinge und Schrott ist es zweckmäßig, wenn die Eisenschwamm-Kohlepreßlinge jeweils vor dem Schrott chargiert werden, so daß sie durch den auflastenden Schrott nach unten gedrückt werden und damit die Auflösungsbedigungen des durch die Preßlinge eingebrachten Kohlenstoffs in der Schmelze verbessert werden.

Vorzugsweise wird beim Abstechen nach dem Einschmelzen und Frischen der Stahlschmelze ein Rest (Sumpf) im Schmelzgefäß 14 für den darauffolgenden Schmelzprozeß zurückgehalten.

## Patentansprüche

1. Verfahren zur Herstellung von Stahl aus Feinerz, bei dem das Feinerz in einer Wirbelschicht eines Reduktionsaggregats zusammen mit einem Reduktionsgas zu Eisenschwammpartikeln reduziert und diese einem Schmelzgefäß zugeführt werden, in dem Sie unter Zufuhr von Kohle und Sauerstoff erschmolzen und zu Stahl gefrischt werden, dadurch **gekennzeichnet,** daß das Feinerz in Anwesenheit von Kohle in einer Wirbelschicht reduziert und das aus dem Reduktionsaggregat ausgetragene Gemisch aus Eisenschwammpartikeln und Feinkohle vor dem Einbringen in das Schmelz- und Firschgefäß heißkompaktiert wird.

2. Verfahren nach Anspruch 1, dadurch **gekennzeichnet,** daß das Feinerz in einer Vorreduktionsstufe vorreduziert wird, bevor es in einer Fertigreduktionsstufe bei Temperaturen von etwa 900°C fertig reduziert wird.

3. Verfahren nach Anspruch 1 oder 2, dadurch **gekennzeichnet,** daß dem ausgetragenen Gemisch aus Eisenschwammpartikeln und Kohle vor der Heißkompaktierung zusätzlich Feinkohle zugeführt wird.

4. Verfahren nach einem der Ansprüche 1 bis 3, dadurch **gekennzeichnet,** daß das Schmelz- und Frischgefäß außerdem mit Schrott beschickt wird.

5. Verfahren nach einem der Ansprüche 1 bis 4, dadurch **gekennzeichnet,** daß der Schrott durch die heißen Abgase des Schmelz- und Frischgefäßes vorerhitzt wird.

6. Verfahren nach einem der Ansprüche 1 bis 5, dadurch **gekennzeichnet,** daß zum Einschmelzen der Eisenschwamm-Kohle-Preßlinge und gegebenenfalls von Schrott durch Unterbaddüsen Sauerstoff in eine im Schmelz- und Frischgefäß vorhandene Schmelze eingeblasen wird, die die einzuschmelzenden Materialien wenigstens teilweise bedeckt.

7. Verfahren nach einem der Ansprüche 4 bis 6, dadurch **gekennzeichnet,** daß beim Chargieren von Einsatzmaterial in das Schmelz- und Frischgefäß die Eisenschwamm -Kohle-Preßlinge jeweils vor dem Schrott chargiert werden.

8. Verfahren nach einem der Ansprüche 1 bis 7, dadurch **gekennzeichnet,** daß die beim Einblasen von Sauerstoff in eine im Schmelz- und Frischgefäß vorhandene Schmelze austretenden CO-haltigen Gase im Gefäß nachverbrannt und durch einen oberhalb des Schmelz- und Frischgefäßes angeordneten Schrottvorwärmer hindurch geleitet werden.

## Claims

1. A method for producing steel from fine ore, in which the fine ore is pre-reduced with a reduction gas and finish-reduced to form sponge iron particles in a fluidised bed of a reduction unit, and the sponge iron particles are fed to a melting vessel in which they are smelted with coal and oxygen being supplied and are refined to form steel, characterized in that the fine ore is reduced in the presence of coal in the fluidised bed and the mixture of sponge iron particles and fine coal discharged from the reduction unit is hot-compacted to form pressed sponge iron/coal pieces before introduction into the melting and refining vessel.

2. A method according to Claim 1, characterized in that the fine ore is pre-reduced in a pre-reduction stage before it is finish-reduced in a finish-reduction stage at temperatures of about 900°C.

3. A method according to Claim 1 or 2, characterized in that additionally fine coal is supplied to the mixture of sponge iron particles and coal which is discharged before hot-compacting.

4. A method according to one of Claims 1 to 3, characterized in that the melting and refining vessel is furthermore charged with scrap.

5. A method according to one of Claims 1 to 4, characterised in that the scrap is pre-heated by the hot exhaust gases from the melting and refining vessel.

6. A method according to one of Claims 1 to 5, characterized in that, for melting down the pressed sponge iron-carbon pieces and optionally scrap, oxygen is blown through under-bath nozzles into a melt contained in the melting and refining vessel which at least partially covers the materials to be melted down.

7. A method according to one of Claims 4 to 6, characterized in that when charging feedstock into the melting and refining vessel the pressed sponge iron-carbon pieces are charged each time before the scrap.

8. A method according to one of Claims 1 to 7, characterized in that the CO-containing gases which emerge when oxygen is blown into a melt contained in the melting and refining vessel are after-burned in the vessel and are passed through a scrap pre-heater located above the melting and refining vessel.

## Revendications

1. Procédé de production d'acier à partir de fines de minerai, qui consiste à préréduire et à réduire à l'état final en particules d'éponge de fer les fines de minerai dans un lit fluidisé d'une installation de réduction par un gaz réducteur, et à envoyer les particules d'éponge de fer à un récipient de fusion, dans lequel elles sont fondues avec apport de charbon et d'oxygène et sont affinées en acier, caractérisé en ce qu'il consiste à réduire les fines de minerai en présence de charbon dans le lit fluidisé, et à compacter à chaud en des comprimés d'éponge de fer et de charbon, le mélange déchargé de l'installation de réduction et constitué de particules d'éponge de fer et de fines de charbon avant de l'introduire dans le récipient de fusion et d'affinage.

2. Procédé suivant la revendication 1, caractérisé en ce qu'il consiste à préréduire les fines de minerai dans un étage de préréduction avant de les réduire à l'état final dans un étage de réduction à l'état final à des températures de 900°C environ.

3. Procédé suivant la revendication 1 ou 2, caractérisé en ce qu'il consiste à ajouter des fines de charbon supplémentaires avant le compactage à chaud au mélange déchargé de particules d'éponge de fer et de charbon.

4. Procédé suivant l'une des revendications 1 à 3, caractérisé en ce qu'il consiste à charger en outre le récipient de fusion et d'affinage de ferraille.

5. Procédé suivant l'une des revendications 1 à 4, caractérisé en ce qu'il consiste à préchauffer la ferraille par les effluents gazeux chauds du récipient de fusion et d'affinage.

6. Procédé suivant l'une des revendications 1 à 5, caractérisé en ce qu'il consiste, pour fondre les comprimés d'éponge de fer et de charbon et, le cas échéant, de ferraille, à insuffler par des buses en-dessous du bain de l'oxygène dans une masse fondue présente dans un récipient de fusion et d'affinage, cette masse fondue recouvrant au moins partiellement les matériaux à fondre.

7. Procédé suivant l'une des revendications 4 à 6, caractérisé en ce qu'il consiste, lors du chargement de la matière de charge dans le récipient de fusion et d'affinage, à charger les comprimés d'éponge de fer et de charbon avant la ferraille.

8. Procédé suivant l'une des revendications 1 à 7, caractérisé en ce qu'il consiste à effectuer, lors de l'insufflation d'oxygène dans une masse fondue présente dans un récipient de fusion et d'affinage, une post-combustion des gaz sortants contenant du CO et à les envoyer dans un préchauffeur de ferraille disposé au-dessus du récipient de fusion et d'affinage.
